(19) Europäisches Patentamt
European Patent Office
Office européen des brevets

(11) **EP 4 564 569 A1**

(12) **EUROPEAN PATENT APPLICATION**

(43) Date of publication:
**04.06.2025 Bulletin 2025/23**

(51) International Patent Classification (IPC):
**H01M 50/383** $^{(2021.01)}$  **H01M 10/613** $^{(2014.01)}$

(21) Application number: 24212708.2

(22) Date of filing: **13.11.2024**

(52) Cooperative Patent Classification (CPC):
**H01M 10/613; H01M 10/486; H01M 50/383;**
H01M 2200/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 KR 20230168370**

(71) Applicant: **SAMSUNG SDI CO., LTD.**
**Yongin-si, Gyeonggi-do 17084 (KR)**

(72) Inventor: **KIM, Giyoung**
**17084 Yongin-si (KR)**

(74) Representative: **Marks & Clerk LLP**
**15 Fetter Lane**
**London EC4A 1BW (GB)**

(54) **RECHARGEABLE BATTERY PACK**

(57)    A rechargeable battery pack includes unit batteries neighboring each other, a case including an internal space for accommodating the unit batteries, fire-extinguishing agents spaced from the unit batteries and configured to generate a solid aerosol at a predetermined or set temperature, and a medium between the fire-extinguishing agents.

## FIG. 1

EP 4 564 569 A1

**Description**

**BACKGROUND**

**1. Field**

Aspects of embodiments of the present disclosure relate to a rechargeable battery pack.

**2. Description of the Related Art**

Generally, a rechargeable battery may be repeatedly charged and discharged.

A rechargeable battery pack may include unit batteries and a case for receiving the unit batteries.

Some rechargeable battery packs have a problem in that if one of the unit batteries ignites, neighboring unit batteries may be ignited due to the flame generated from the ignited unit battery.

**SUMMARY**

One or more embodiments of the present disclosure provide a rechargeable battery pack configured to actively extinguish an ignited unit battery from among a plurality of unit batteries.

According to one or more embodiments of the present disclosure, a rechargeable battery pack includes: unit batteries neighboring each other; a case including an internal space for accommodating the unit batteries; fire-extinguishing agents spaced from the unit batteries and configured to generate a solid aerosol at a set temperature; and a medium between, e.g. disposed between, the fire-extinguishing agents.

The medium may include a heat transfer unit for transferring heat between the fire-extinguishing agents.

The heat transfer unit may connect the fire-extinguishing agents.

The fire-extinguishing agents may be spaced from each other by a distance equal to or greater than 70 mm or about 70mm, and the heat transfer unit may be located between the fire-extinguishing agents.

The medium may include a heat delay unit for blocking a gap between the fire-extinguishing agents.

The heat delay unit may cover the gap between the fire-extinguishing agents.

The fire-extinguishing agents may overlap each other with the heat delay unit therebetween.

A weight of a first fire-extinguishing agent from among the fire-extinguishing agents may satisfy Equation 1: $Y=0.0088X+0.211$, wherein, Y is a weight (g/L) of the first fire-extinguishing agent of the internal space of the case per volume, and X is a battery capacity (Wh) of one of the unit batteries.

In Equation 1, X may satisfy Equation 2: $X=V*6.8/Z$, wherein, V is a battery capacity (Wh) of one of the unit batteries, and Z is a volume (L) of the internal space of the case.

A predetermined or set volume of the internal space of the case may be 6.8L or about 6.8L.

A distance between a first fire-extinguishing agent from among the fire-extinguishing agents and the unit batteries may be 2mm or about 2mm to 70mm or about 70mm.

The distance between the first fire-extinguishing agent and the unit batteries may be 2mm or about 2mm to 32mm or about 32mm.

The distance between the first fire-extinguishing agent and the unit batteries may be equal to or greater than 20mm or about 20mm.

The solid aerosol may include a potassium radical.

The fire-extinguishing agents may include a mixture of a potassium compound and a resin.

The fire-extinguishing agents may further include a mesh supporting the mixture.

The mesh may be configured to penetrate the mixture.

A first fire-extinguishing agent from among the fire-extinguishing agents may be in, e.g. disposed in, the internal space of the case, and a second fire-extinguishing agent of the fire-extinguishing agents may be in, e.g. disposed in, a second internal space of a second case.

The rechargeable battery pack may further include: a battery manager connected to the unit batteries and the fire-extinguishing agents between the unit batteries and the fire-extinguishing agents, wherein the battery manager may be configured to sense temperatures of the unit batteries, and may be configured to heat one of the fire-extinguishing agents responsive to a temperature of one of the unit batteries being greater than the predetermined or set temperature.

The battery manager may further include a heater attached to the fire-extinguishing agents, and the battery manager may be configured to heat the heater.

According to an embodiment, the rechargeable battery pack configured to actively extinguishing the ignited unit battery from among the unit batteries is provided.

At least some of the above and other features of the invention are set out in the claims.

**BRIEF DESCRIPTION OF THE DRAWINGS**

FIG. 1 shows a rechargeable battery pack according to some embodiments.

FIG. 2 shows an example of fire-extinguishing agents and a medium of the rechargeable battery pack shown in FIG. 1.

FIG. 3 shows another example of fire-extinguishing agents and a medium of a rechargeable battery pack according to some embodiments.

FIG. 4 to FIG. 6 show graphs of experimental results of checking effects according to weights of fire-extinguishing agents of a rechargeable battery pack according to some embodiments.

FIG. 7 to FIG. 9 show graphs of experimental results of checking effects according to a distance between a fire-extinguishing agent of a rechargeable battery pack and unit batteries according to some embodiments.

FIG. 10 shows a rechargeable battery pack according to some embodiments.

FIG. 11 shows a rechargeable battery pack according to some embodiments.

DETAILED DESCRIPTION OF THE DRAWINGS

The present disclosure will be described more fully hereinafter with reference to the accompanying drawings, in which embodiments of the present disclosure are shown. As those skilled in the art would realize, the embodiments described herein may be modified in one or more suitable different ways, all without departing from the scope of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

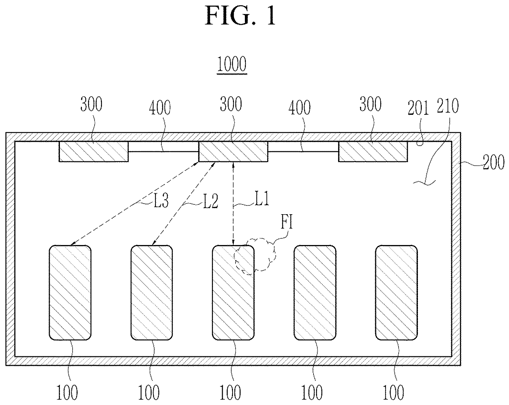

A rechargeable battery pack 1000 according to one or more embodiments will be described with reference to FIGS. 1 to FIG. 9.

The rechargeable battery pack 1000 may include unit batteries 100 and a case 200 for receiving (or accommodating) the unit batteries 100. However, the rechargeable battery pack 1000 may not be limited thereto, and may include rechargeable battery modules, respectively including unit batteries and a case including the rechargeable battery modules.

Referring to FIG. 1, the rechargeable battery pack 1000 may include unit batteries 100, a case 200, fire-extinguishing agents 300, and a medium 400.

The unit batteries 100 may neighbor (e.g., are adjacent to or stacked next to) each other, and may be received (or accommodated) in an internal space 210 of the case 200. The unit batteries 100 may have various suitable rechargeable battery capacities and various suitable rechargeable battery forms. For example, the respective unit batteries 100 may have battery capacity of 18Wh or about 18Wh and a cylindrical shape, but are not limited thereto. The unit batteries 100 may be connected to each other in series or in parallel by utilizing various suitable connection elements. The unit batteries 100 may contact each other, and/or the unit batteries 100 may be spaced from each other, without being limited thereto. The unit batteries 100 may be arranged at a lower side of the internal space 210 of the case 200, but are not limited thereto.

The case 200 may include an internal space 210 for receiving the unit batteries 100. The internal space 210 of the case 200 may have one or more suitable space shapes for receiving (or accommodating) the rechargeable battery pack 1000. The internal space 210 of the case 200 may have one or more suitable volumes. The case 200 may include one or more suitable lower covers, lateral covers, and/or upper covers for receiving (or accommodating) the unit batteries 100.

The fire-extinguishing agents 300 may be spaced from the unit batteries 100 in the internal space 210 of the case 200. The fire-extinguishing agents 300 may generate a solid aerosol at a set or reference temperature (e.g., a predetermined temperature) and may extinguish flames FI generated in the internal space 210.

For example, the fire-extinguishing agents 300 may generate a solid aerosol including a potassium radical at the set or predetermined temperature of 300°C or about 300°C or more. If the flame FI is generated by one of the unit batteries 100, at least one of the fire-extinguishing agents 300 generates the solid aerosol including a potassium radical, and an endothermic reaction for generating stable compounds is generated from the fire-extinguishing agents 300 so that the temperature in the internal space 210 of the case 200 where the flame FI is generated may be lowered and the ignited unit battery 100 from among the unit batteries 100 may be efficiently extinguished.

According to another example, if the flame FI is generated by one of the unit batteries 100, at least one of the fire-extinguishing agents 300 may generate the solid aerosol including a potassium radical, and the potassium radical deteriorates concentration of H and OH in, e.g. disposed in, the internal space 210 of the case 200 so that the concentration of H and OH may be minimized or reduced in the internal space 210 of the case 200 where the flame FI is generated, and the ignited unit battery 100 of the unit batteries 100 may be efficiently extinguished.

According to another example, the concentration of H and OH in, e.g. disposed in, the internal space 210 of the case 200 is deteriorated (or broken down) according to the Chemical Formula shown below by $K_2O$ and $KO^-$ that are potassium compounds included in the solid aerosol generated by at least one of the fire-extinguishing agents 300, so the ignited unit battery 100 in, e.g. disposed in, the internal space 210 may be extinguished.

Chemical Formula          $K_2O + H^+ \rightarrow 2KOH, KOH + OH^- \rightarrow H_2O, KO^- + H^+ \rightarrow KOH$

The fire-extinguishing agents 300 may be on, e.g. disposed on, an upper side (or area) of the internal space 210 of the case 200, but are not limited thereto. The fire-extinguishing agents 300 may be attached to an internal surface 201 of the case 200 on, e.g. disposed on, an upper side (or area) of the internal space 210 of the case 200.

For example, the fire-extinguishing agents 300 may be attached to the internal side 201 of the case 200 by one or more suitable attaching elements such as a tape, or may be attached to the same by support elements such as a support protruding from the internal side 201 of the case 200. The fire-extinguishing agents 300 may be covered by one or more suitable cover elements such as a capsule.

The medium 400 may be between, e.g. located between, the fire-extinguishing agents 300. The medium 400 may connect the fire-extinguishing agents 300. The medium 400 may transmit heat to a second fire-extinguishing agent 300 from a first fire-extinguishing agent 300 ignited by the flame FI of the ignited unit battery 100 from among the fire-extinguishing agents 300. The medium 400 may include a heat transfer unit for transmitting heat between the fire-extinguishing agents 300. The heat transfer unit of the medium 400 may connect the fire-extinguishing agents 300. The fire-extinguishing agents 300 may be spaced from each other by 70mm or about 70mm or more with the heat transfer unit of the medium 400 therebetween. The heat transfer unit of the medium 400 may include one or more suitable types (kinds) of heat transfer elements. For example, the heat transfer unit of the medium 400 may have a form in which a flammable material such as gunpowder, nitric acid potassium, or oil is coated along a line for connecting the neighboring fire-extinguishing agents 300, but is not limited thereto. For another example, the heat transfer unit of the medium 400 may include one or more suitable types (kinds) of metals for transmitting heat between the neighboring fire-extinguishing agents 300, but is not limited thereto. The heat transfer unit of the medium 400 may include one or more suitable heat transfer elements for transmitting heat of 300°C or about 300°C or more between the neighboring fire-extinguishing agents 300.

The heat transfer unit of the medium 400 may connect the fire-extinguishing agents 300 to transfer heat between the fire-extinguishing agents 300 so that the heat from the first fire-extinguishing agent 300 ignited by the flame FI of the ignited unit battery 100 may generate a solid aerosol to the neighboring second fire-extinguishing agent 300, and the second fire-extinguishing agent 300 may also be ignited and the second fire-extinguishing agent 300 may generate a solid aerosol if a set or predetermined time passes from the ignition of the first fire-extinguishing agent 300. The fire-extinguishing agents 300 may be sequentially heated with a set or predetermined temperature by the medium 400 to sequentially generate the solid aerosol in the internal space 210 of the case 200, thereby efficiently extinguishing the ignited unit battery 100 from among the unit batteries 100.

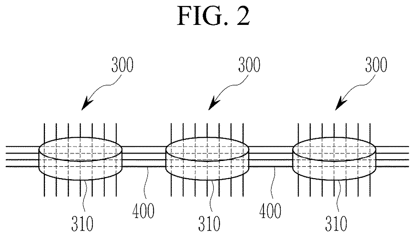

Referring to FIG. 2, the fire-extinguishing agents 300 may include a mixture 310 of one or more suitable potassium compounds and one or more suitable resins and a mesh for supporting the mixture 310. The mesh may be included in the medium 400, and in some embodiments, an additional mesh may be included in the fire-extinguishing agent 300, but may not be limited thereto. The mixture 310 may have a form in which the potassium compound and the resin may be compressed at a high temperature and a high pressure, but is not limited thereto. The mesh of the medium 400 may support the mixture 310. The mesh of the medium 400 may be supported in the internal side of the case, but is not limited thereto. The mesh of the medium 400 may penetrate the mixture 310 in a horizontal direction and may support the same, but in some embodiments, it may support a lower side or an upper side of the mixture 310 but may not be limited thereto.

As the mixture 310 of the fire-extinguishing agents 300 is supported by the mesh of the medium 400, the mixture 310 of the first fire-extinguishing agent 300 ignited by the ignited unit battery 100 from among the fire-extinguishing agents 300 may be supported by the mesh of the medium 400. Therefore, the ignited mixture 310 may fall to the unit battery 100 from the mesh of the medium 400, and the increase of the temperature of the unit battery 100 may be suppressed or reduced.

The mesh of the medium 400 may include a metal, which is the heat transfer unit. The mesh of the medium 400 may connect the fire-extinguishing agents 300 to transfer heat between the fire-extinguishing agents 300, and the heat of the first fire-extinguishing agent 300 ignited by the flame FI of the ignited unit battery 100 may generate a solid aerosol, which may also be transferred to the neighboring second fire-extinguishing agent 300 so that the second fire-extinguishing agent 300 may also be ignited and the second fire-extinguishing agent 300 may generate a solid aerosol if a set or predetermined time passes from the ignition of the first fire-extinguishing agent 300. The fire-extinguishing agents 300 may be sequentially heated at a set or predetermined temperature by the mesh of the medium 400 to sequentially generate a solid aerosol in the internal space 210 of the case 200, thereby efficiently extinguishing the ignited unit battery 100 from among the unit batteries 100.

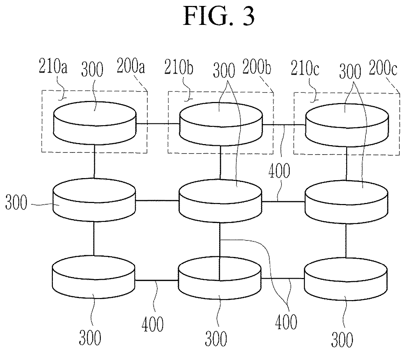

According to another example, referring to FIG. 3, the first fire-extinguishing agent 300 from among the fire-extinguishing agents 300 may be in, e.g. arranged in, the first internal space 210a of the first case 200a, the second fire-extinguishing agent 300 may be in, e.g. arranged in, the second internal space 210b of the second case 200b, and the third fire-extinguishing agent 300 may be in, e.g. arranged in, the third internal space 210c of the third case 200c. The medium 400 may connect the first fire-extinguishing agent 300, the second fire-extinguishing agent 300, and the third fire-extinguishing agent 300 of the fire-extinguishing agents 300. The medium 400 may include a heat transfer unit. The medium 400 may connect the first fire-extinguishing agent 300 in, e.g. arranged in, the first internal space 210a of the first case 200a, the second fire-extinguishing agent 300 arranged in the second internal space 210b of the second case 200b, and the third fire-extinguishing agent 300 arranged in the third internal space 210c of the third case 200c, to transmit heat between the fire-extinguishing agents 300. The fire-extinguishing agents 300 may be sequentially heated at a set or predetermined temperature by the medium 400 to sequentially generate a solid aerosol in the first internal space 210a of the first case 200a, the second internal space 210b of the second case 200b, and the third internal space 210c of the third case 200c, thereby efficiently extinguishing the unit batteries 100 arranged in the internal spaces 210a,210b,210c of the cases 200a, 200b, 200c.

A weight of the first fire-extinguishing agent 300 from among the fire-extinguishing agents 300 may satisfy Equation 1.

### Equation 1

$$Y=0.0088X+0.211$$

Here, Y is a weight (g/L) of the first fire-extinguishing agent 300 of the internal space 210 of the case 200 per volume, and X is a battery capacity (Wh) of one of the unit batteries 100 in the internal space 210 of the case 200. For example, the set or predetermined volume of the internal space 210 of the case 200 may be 6.8L or about 6.8L, but is not limited thereto.

If the internal space 210 of the case 200 has various volumes, X in Equation 1 may satisfy Equation 2.

### Equation 2

$$X=V*6.8/Z$$

Here, V is the battery capacity (Wh) of one of the unit batteries 100, and Z is the volume (L) of the internal space 210 of the case 200.

The weight (g/L) of the first fire-extinguishing agent 300 of the internal space 210 of the case 200 per volume may satisfy Equation 1 and Equation 2 so the rechargeable battery pack 1000 including the fire-extinguishing agents 300 for actively extinguishing the ignited unit battery 100 from among the unit batteries 100.

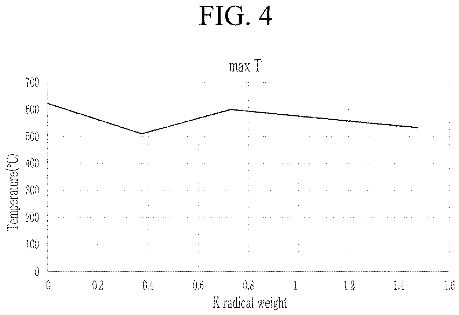

A test result of checking the effect (or effectiveness) of the first fire-extinguishing agent 300 from among the fire-extinguishing agents 300 of the rechargeable battery pack 1000 according to some embodiments according to weights will now be described with reference to FIG. 4 to FIG. 6.

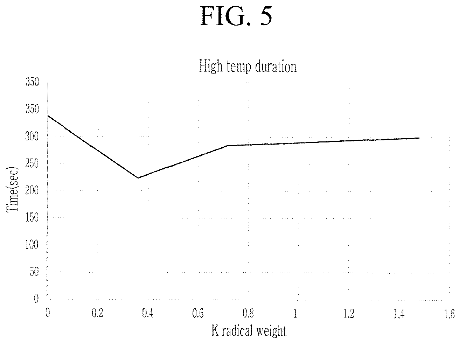

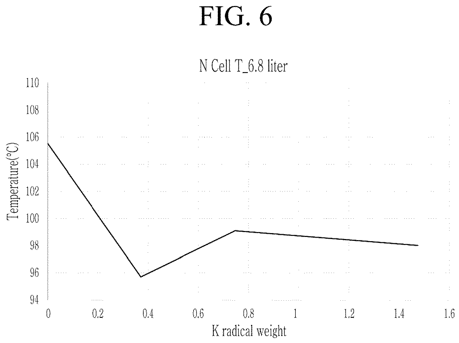

FIG. 4 shows a graph of a maximum temperature (max T) of the unit battery 100 ignited according to the weight (K radical weight) of the fire-extinguishing agent 300 of the internal space 210 per volume if the internal space 210 of the case 200 has a volume of 6.8L or about 6.8L, FIG. 5 shows a graph of a maximum temperature duration time (high temp duration) of the unit battery 100 ignited according to the weight (K radical weight) of the fire-extinguishing agent 300 of the internal space 210 per volume if the internal space 210 of the case 200 has the volume of 6.8L or about 6.8L, and FIG. 6 shows a graph of the temperature (N Cell T) of the unit battery 100 around, e.g. arranged around, the unit battery 100 ignited according to the weight (K radical weight) of the fire-extinguishing agent 300 of the internal space 210 per volume if the internal space 210 of the case 200 has the volume of 6.8L or about 6.8L. For example, the unit battery 100 around, e.g. disposed around, the ignited unit battery 100 may include another unit battery 100 neighboring the ignited unit battery 100.

FIG. 4 to FIG. 6 show that the maximum temperature (max T) of the ignited unit battery 100, the maximum temperature duration time (high temp duration), and the temperature (N Cell T) of the unit battery 100 around, e.g. disposed around, the ignited unit battery 100 have a lowest point if (e.g., when) the weight (K radical weight) of the fire-extinguishing agent 300 is 0.37g/L or about 0.37g/L if the internal space 210 of the case 200 has the volume of 6.8L or about 6.8L, the respective unit batteries 100 received (or accommodated) in the internal space 210 of the case 200 have the battery capacity of 18Wh or about 18Wh, and a distance between the fire-extinguishing agent 300 and the unit batteries 100 is 2mm or about 2mm to 70mm or about 70mm.

For example, Y is calculated as 0.37g/L or about 0.37g/L if 18Wh or about 18Wh is substituted for X in Equation 1.

### Equation 1

$$Y=0.0088X+0.211$$

Here, Y is a weight (g/L) of the first fire-extinguishing agent 300 of the internal space 210 of the case 200 per volume, and X is a battery capacity (Wh) of one of the unit batteries 100 if the internal space 210 of the case 200 has a set or predetermined volume.

In some embodiments, if the internal space 210 of the case 200 is 6.8L or about 6.8L, the maximum temperature (max T) of the unit battery 100 ignited in the internal space 210 of the case 200, the maximum temperature duration time (High temp duration), and the temperature (N Cell T) of the unit battery 100 around, e.g. disposed around, the ignited unit battery 100 have the lowest point at the weight (K radical weight) of 0.37g/L or about 0.37g/L of the fire-extinguishing agent 300 calculated according to Equation 1.

For example, X in Equation 1 may satisfy Equation 2 if the internal space 210 of the case 200 has one or more suitable volumes.

## Equation 2

$$X=V*6.8/Z$$

Here, V is the battery capacity (Wh) of one of the unit batteries 100, and Z is the volume (L) of the internal space 210 of the case 200.

If the internal space 210 of the case 200 is 0.765L or about 0.765L and the battery capacity of one of the unit batteries 100 is 18Wh or about 18Wh, then 18Wh or about 18Wh may be substituted for V, 0.765L or about 0.765L may be substituted for Z, and 160Wh or about 160Wh may be calculated for X in Equation 2. If 160Wh or about 160Wh is substituted for X in Equation 1, Y may be calculated as 1.62g/L or about 1.62g/L.

If the internal space 210 of the case 200 is 0.765L or about 0.765L, the maximum temperature of the unit battery 100 ignited in the internal space 210 of the case 200, the maximum temperature duration time (high temperature duration), and the temperature (N Cell T) of the unit battery 100 around, e.g. disposed around, the ignited unit battery 100 may have the lowest point at 1.62g/L or about 1.62g/L as calculated according to Equation 1 and Equation 2.

Referring to FIG. 1, for example, the volume of the internal space 210 of the case 200 may be 10L or about 10L, and the weight (K radical weight) of the first fire-extinguishing agent 300 from among the fire-extinguishing agents 300 may be 1g or about 1g to 32g or about 32g. If the weight (K radical weight) of the first fire-extinguishing agent 300 is less than 1g or about 1g, it may be difficult to process the fire-extinguishing agent 300, difficult to attach the fire-extinguishing agent 300 to the internal surface 201, and an amount of the fire-extinguishing agent 300 is less (e.g., a relatively small amount) so it may be difficult to extinguish the ignited unit battery 100. If the weight (K radical weight) of the first fire-extinguishing agent 300 is greater than 32g or about 32g, the ignited unit battery 100 may be extinguished, and the ignition may be spread to the unit batteries 100 that are around, e.g. arranged around, the ignited unit battery 100 by the heat generated by the ignition of the fire-extinguishing agent 300. In some embodiments, a numerically limited configuration in which the volume of the internal space 210 of the case 200 is 10L or about 10L, and the weight (K radical weight) of the first fire-extinguishing agent 300 from among the fire-extinguishing agents 300 is 1g or about 1g to 32g or about 32g define threshold values for an upper value and a lower value.

Referring to FIG. 1, the distance between the first fire-extinguishing agent 300 and the unit batteries 100 may be 2mm or about 2mm to 70mm or about 70mm. For example, the distance between the first fire-extinguishing agent 300 and the unit batteries 100 may include a first distance L1 between the fire-extinguishing agent 300 and the first unit battery 100 in a vertical direction, a second distance L2 between the fire-extinguishing agent 300 and the second unit battery 100, and a third distance L3 between the fire-extinguishing agent 300 and the third unit battery 100. The distance between the first fire-extinguishing agent 300 and the unit batteries 100 may include a distance between the first fire-extinguishing agent 300 and one of the unit batteries 100 and distances between the first fire-extinguishing agent 300 and the respective unit batteries 100.

For example, if the internal space 210 of the case 200 has the volume of 6.8L or about 6.8L, and the battery capacity of one of the unit batteries 100 is 18Wh or about 18Wh, and the fire-extinguishing agent 300 has the weight (K radical weight) of 5g or about 5g, the distance between the first fire-extinguishing agent 300 and the unit batteries 100 may be 2mm or about 2mm to 70mm or about 70mm. When the distance between the first fire-extinguishing agent 300 and the unit batteries 100 is less than 2mm or about 2mm, the fire-extinguishing agent 300 hinders a path of the flame FI of the ignited unit battery 100, and the temperatures of the ignited unit battery 100 and the unit battery 100 around, e.g. disposed around, the ignited unit battery 100 may increase by the ignited heat of the fire-extinguishing agent 300. If the distance between the first fire-extinguishing agent 300 and the unit batteries 100 is greater than 70mm or about 70mm, the heat transmitted to the fire-extinguishing agent 300 from the flame FI of the ignited unit battery 100 may be lower than the temperature (e.g., 300°C or more) set to ignite the fire-extinguishing agent 300, and the fire-extinguishing agent 300 may fail to generate the solid aerosol. A numerically limited configuration in which the distance between the first fire-extinguishing agent 300 and the unit batteries 100 is 2mm or about 2mm to 70mm or about 70mm define threshold values for an upper value and a lower value.

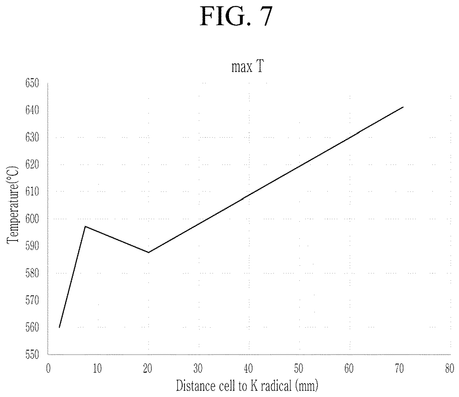

A test result of checking the effect caused by the distance between the first fire-extinguishing agent 300 of the rechargeable battery pack 1000 and the unit batteries 100 according to some embodiments will now be described with reference to FIG. 7 to FIG. 9.

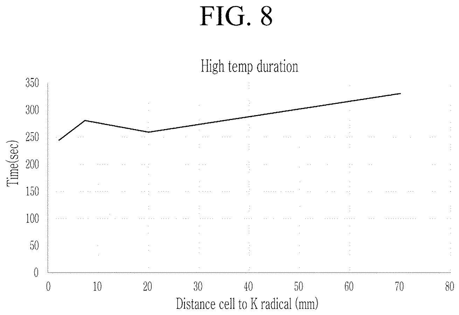

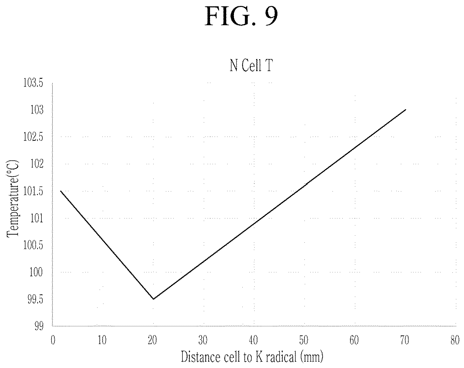

FIG. 7 shows a graph of the maximum temperature (max T) of the unit battery 100 ignited according to the distance (distance cell to K radical) between the fire-extinguishing agent 300 and the unit batteries 100 if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g. FIG. 8 shows a graph of the maximum temperature duration time (high temp duration) of the unit battery 100 ignited according to the distance (distance cell to K radical) between the fire-extinguishing agent 300 and the unit batteries 100 if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g. FIG. 9 shows a graph of the temperature (N Cell T) of the unit battery 100 around, e.g. arranged around, the unit battery 100 ignited according to the distance (distance cell to K radical) between the fire-extinguishing agent 300 and the unit batteries 100 if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g.

Referring to FIG. 7 to FIG. 9, it may be found that, if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g, the maximum temperature (max T) and the maximum temperature duration time (high temp duration) of the ignited unit battery 100 is relatively low if (e.g., when) the distance between the unit battery 100 and the fire-extinguishing agent 300 is 2mm or about 2mm to 32mm or about 32mm, and the temperature (N Cell T) of the unit battery 100 around, e.g. arranged around, the ignited unit battery 100 is relatively low if (e.g., when) the distance between the unit battery 100 and the fire-extinguishing agent 300 is 2mm or about 2mm to 32mm or about 32mm, and it has the lowest point if (e.g., when) the distance between the unit battery 100 and the fire-extinguishing agent 300 is 20mm or about 20mm. This may be found as that the flame FI of the unit battery 100 ignited before the fire-extinguishing agent 300 is ignited may be hindered to induce the flame FI toward the unit battery 100 that are around, e.g. arranged around, the ignited unit battery 100, and the heat generated if (e.g., when) the fire-extinguishing agent 300 is ignited is transmitted to the unit battery 100 around, e.g. arranged around, the ignited unit battery 100 to increase the temperature (N Cell T) of the unit battery 100 arranged around the ignited unit battery 100.

According to the above-described test result, it may be found that the numerically limited configuration in which the distance (distance cell to K radical) between the fire-extinguishing agent 300 and the unit batteries 100 is 2mm or about 2mm to 32mm or about 32mm if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g.

It may be found that a numerically limited configuration in which the distance between the fire-extinguishing agent 300 and the unit batteries 100 is 20mm or about 20mm, if the internal space 210 of the case 200 has the volume of 6.8L or about 6.8L, the battery capacity of one of the unit batteries 100 is 18Wh or about 18Wh, and the fire-extinguishing agent 300 has the weight of 5g or about 5g.

For example, the medium 400 may connect the fire-extinguishing agents 300 to transmit heat between the fire-extinguishing agents 300. The fire-extinguishing agents 300 may be sequentially heated at a set or predetermined temperature by the medium 400 to sequentially generate a solid aerosol in the internal space 210 of the case 200 so the rechargeable battery pack 1000 according to one or more embodiments may efficiently extinguish the ignited unit battery 100 from among the unit batteries 100.

In some embodiments, the weight (g/L) of the first fire-extinguishing agent 300 of the internal space 210 of the case 200 per volume may satisfy Equation 1, and the maximum temperature (max T) of the ignited unit battery 100, the maximum temperature duration time (high temp duration), and the temperature (N Cell T) of the unit battery 100 around, e.g. arranged around, the ignited unit battery 100 may become the lowest so the rechargeable battery pack 1000 according to one or more embodiments may actively extinguish the ignited unit battery 100 of the unit batteries 100.

The rechargeable battery pack 1000 according to one or more embodiments may include a configuration with a numerically limited threshold defining the volume of the internal space 210 of the case 200 as 10L or about 10L, the weight of the first fire-extinguishing agent 300 is 1g or about 1g to 32g or about 32g, thereby actively extinguishing the ignited unit battery 100 from among the unit batteries 100.

The rechargeable battery pack 1000 according to one or more embodiments may include a configuration with a numerically limited threshold defining the distance between the first fire-extinguishing agent 300 and the unit batteries 100 to 2mm or about 2mm to 70mm or about 70mm, thereby actively extinguishing the ignited unit battery 100 from among the unit batteries 100.

The rechargeable battery pack 1000 according to one or more embodiments may include a configuration with a numerically limited threshold defining the distance between the first fire-extinguishing agent 300 and the unit batteries 100 as 2mm or about 2mm to 32mm or about 32mm, thereby actively extinguishing the ignited unit battery 100 from among the unit batteries 100.

The rechargeable battery pack 1000 according to one or more embodiments may include a configuration with a numerically limited threshold defining the distance between the first fire-extinguishing agent 300 and the unit batteries 100 as 20mm, thereby actively extinguishing the ignited unit battery 100 from among the unit batteries 100.

The rechargeable battery pack 1000 for actively extinguishing the ignited unit battery 100 from among the unit batteries 100 is provided.

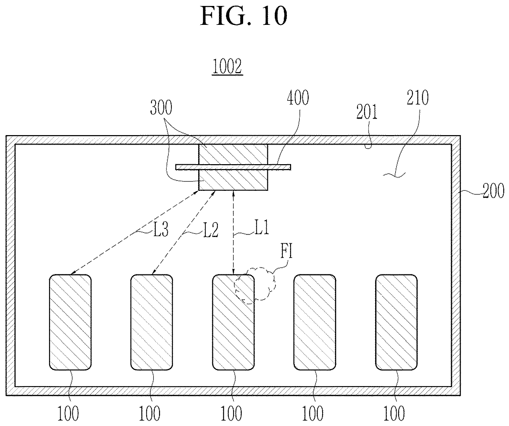

A rechargeable battery pack 1002 according to some other embodiments will now be described with reference to FIG. 10.

Portions that are different from the rechargeable battery pack according to one or more embodiments will now be described.

Referring to FIG. 10, the rechargeable battery pack 1002 according to said other embodiments may include unit batteries 100, a case 200, fire-extinguishing agents 300, and a medium 400.

The fire-extinguishing agents 300 may overlap each other in the vertical direction with the medium 400 therebetween in the internal space 210 of the case 200. The medium 400 may be between, e.g. arranged between, the fire-extinguishing agents 300. The medium 400 may separate the fire-extinguishing agents 300. The medium 400 may block or reduce heat from the first fire-extinguishing agent 300 ignited by the flame FI of the ignited unit battery 100 from among the fire-extinguishing agents 300 for a set or predetermined time. The medium 400 may include a heat delay unit for blocking gaps between the fire-extinguishing agents 300. The heat delay unit of the medium 400 may cover the gaps between the fire-extinguishing agents 300. The heat delay unit of the medium 400 may include one or more suitable types (kinds) of heat delay elements for blocking heat for a set or predetermined time. For example, the heat delay unit of the medium 400 may include paper and a resin tape for covering the gaps between the overlapped fire-extinguishing agents 300. For example, the resin tape may include one or more suitable types (kinds) of suitable resins such as polypropylene (PP), polyimide (PI), or polyethylene terephthalate (PET). The heat delay unit of the medium 400 may include one or more suitable types (kinds) of heat delay elements for delaying the heat transmitted between the overlapped fire-extinguishing agents 300 for a set or predetermined time.

The heat delay unit of the medium 400 may block or reduce the gaps between the fire-extinguishing agents 300 to delay the heat transmitted between the fire-extinguishing agents 300 for a set or predetermined time, the heat of the first fire-extinguishing agent 300 ignited by the flame FI of the ignited unit battery 100 among the fire-extinguishing agents 300 and generating a solid aerosol may be transmitted to the neighboring second fire-extinguishing agent 300 after a set or predetermined time so the second fire-extinguishing agent 300 may be ignited after a set or predetermined time passes from the ignition of the first fire-extinguishing agent 300, and the second fire-extinguishing agent 300 may generate a solid aerosol. The fire-extinguishing agents 300 may be sequentially heated at a set or predetermined temperature by the medium 400 to sequentially generate a solid aerosol in the internal space 210 of the case 200, thereby efficiently extinguishing the ignited unit battery 100 of the unit batteries 100.

For example, the medium 400 may block or reduce the gaps between the fire-extinguishing agents 300 to delay the heat transmitted between the fire-extinguishing agents 300 for a set or predetermined time, and the fire-extinguishing agents 300 may be sequentially heated at a set or predetermined temperature by the medium 400 to sequentially generate a solid aerosol in the internal space 210 of the case 200 so the rechargeable battery pack 1002 according to other embodiments may efficiently extinguish the ignited unit battery 100 from among the unit batteries 100.

The weight (g/L) of the first fire-extinguishing agent 300 of the internal space 210 of the case 200 per volume may satisfy Equation 1, and the maximum temperature (max T) of the ignited unit battery 100, the maximum temperature duration time (high temperature duration), and the temperature (N Cell T) of the unit battery 100 around, e.g. arranged around, the ignited unit battery 100 may become the lowest so the rechargeable battery pack 1002 according to other embodiments may actively extinguish the ignited unit battery 100 from among the unit batteries 100.

The rechargeable battery pack 1002 includes a configuration with a numerically limited threshold in which the volume of the internal space 210 of the case 200 is 10L or about 10L and the weight of the first fire-extinguishing agent 300 is 1g or about 1g to 32g or about 32g, thereby actively extinguishing the ignited unit battery 100 from among the unit batteries 100.

The rechargeable battery pack 1002 includes a configuration with a numerically limited threshold in which the distance between the first fire-extinguishing agent 300 and the unit batteries 100 is 2mm or about 2mm to 70mm or about 70mm, thereby actively extinguishing the ignited unit battery 100 from among the unit batteries 100.

The rechargeable battery pack 1002 may include a configuration with a numerically limited threshold in which the distance between the first fire-extinguishing agent 300 and the unit batteries 100 is 2mm or about 2mm to 32mm or about 32mm, thereby actively extinguishing the ignited unit battery 100 from among the unit batteries 100.

The rechargeable battery pack 1002 may include a configuration with a numerically limited threshold in which the distance between the first fire-extinguishing agent 300 and the unit batteries 100 is 20mm or about 20mm, thereby actively extinguishing the ignited unit battery 100 from among the unit batteries 100.

The rechargeable battery pack 1002 for actively extinguishing the ignited unit battery 100 from among the unit batteries 100 is provided.

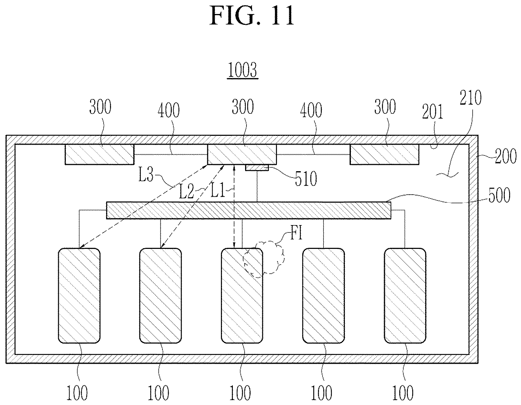

A rechargeable battery pack 1003 according to the other embodiments will now be described with reference to FIG. 11.

Portions that are different from the above-described rechargeable battery packa=s 1000, 1002 will now be described.

Referring to FIG. 11, the rechargeable battery pack 1003 may include unit batteries 100, a case 200, fire-extinguishing agents 300, a medium 400, and a battery manager 500.

The battery manager 500 may be between, e.g. arranged between, the unit batteries 100 and the fire-extinguishing agents 300. The battery manager 500 may be connected to at least one of the unit batteries 100 and the fire-extinguishing agents 300. The battery manager 500 may sense the temperatures of the unit batteries 100. The battery manager 500 may heat at least one of the fire-extinguishing agents 300 if the temperature of at least one of the unit batteries 100 is greater than a set or predetermined temperature. At least one of the fire-extinguishing agents 300 heated by the battery manager 500 may generate a solid aerosol including a potassium radical, and the other fire-extinguishing agents 300 thereof may receive the heat by the medium 400 and may sequentially generate a solid aerosol.

The battery manager 500 may include a heater 510. The heater 510 may be attached to at least one of the fire-extinguishing agents 300, and the battery manager 500 may heat the heater 510 to heat the fire-extinguishing agent 300.

The battery manager 500 may include one or more suitable types (kinds) of battery management systems, and it may include a temperature sensor for sensing the temperature of the unit batteries 100 and a heating element for heating at least one of the fire-extinguishing agents 300, but may not be limited thereto.

For example, the rechargeable battery pack 1003 according to the other embodiments may include the battery manager 500 for sensing the temperature of the unit batteries 100, heating at least one of the fire-extinguishing agents 300, and sequentially generating a solid aerosol from the fire-extinguishing agents 300 to thereby actively extinguish the ignited unit battery 100 that is higher than a set or predetermined temperature or the unit battery 100 that may be ignited with a high probability from among the unit batteries 100.

The medium 400 may connect the gaps between the fire-extinguishing agents 300 to transmit the heat between the fire-extinguishing agents 300. The fire-extinguishing agents 300 may be sequentially heated at a set or predetermined temperature by the medium 400 to sequentially generate a solid aerosol in the internal space 210 of the case 200 so the rechargeable battery pack 1003 may efficiently extinguish the ignited unit battery 100 from among the unit batteries 100.

The weight (g/L) of the first fire-extinguishing agent 300 of the internal space 210 of the case 200 per volume may satisfy Equation 1. The maximum temperature (max T) of the ignited unit battery 100, the maximum temperature duration time (high temp duration), and the temperature (N Cell T) of the unit battery 100 around, e.g. arranged around, the ignited unit battery 100 may become the lowest so the rechargeable battery pack 1003 may actively extinguish the ignited unit battery 100 from among the unit batteries 100.

The rechargeable battery pack 1003 may include a configuration with a numerically limited threshold in which the volume of the internal space 210 of the case 200 is 10L or about 10L and the weight of the first fire-extinguishing agent 300 is 1g or about 1g to 32g or about 32g, thereby actively extinguishing the ignited unit battery 100 from among the unit batteries 100.

The rechargeable battery pack 1003 may include a configuration with a numerically limited threshold in which the distance between the first fire-extinguishing agent 300 and the unit batteries 100 is 2mm or about 2mm to 70mm or about 70mm, thereby actively extinguishing the ignited unit battery 100 from among the unit batteries 100.

The rechargeable battery pack 1003 may include a configuration with a numerically limited threshold in which the distance between the first fire-extinguishing agent 300 and the unit batteries 100 is 2mm or about 2mm to 32mm or about 32mm, thereby actively extinguishing the ignited unit battery 100 from among the unit batteries 100.

The rechargeable battery pack 1003 may include a configuration with a numerically limited threshold in which the distance between the first fire-extinguishing agent 300 and the unit batteries 100 is 20mm or about 20mm, thereby actively extinguishing the ignited unit battery 100 from among the unit batteries 100.

The rechargeable battery pack 1003 for actively extinguishing the ignited unit battery 100 from among the unit batteries 100 is provided.

While the embodiments of the present disclosure have been described in connection with what is presently considered to be practical example embodiments, it is to be understood that the disclosure is not limited to the disclosed embodiments, but is intended to cover one or more suitable modifications and equivalent arrangements included within the scope of the appended claims.

Embodiments are set out in the following clauses.

Clause 1. A rechargeable battery pack comprising: unit batteries neighboring each other; a case comprising an internal space for accommodating the unit batteries; fire-extinguishing agents spaced from the unit batteries and configured to generate a solid aerosol at a set temperature; and a medium between the fire-extinguishing agents.

Clause 2. The rechargeable battery pack of Clause 1, wherein the medium comprises a heat transfer unit for transferring heat between the fire-extinguishing agents.

Clause 3. The rechargeable battery pack of Clause 2, wherein the heat transfer unit connects the fire-extinguishing agents.

Clause 4. The rechargeable battery pack of Clause 2, wherein the fire-extinguishing agents are spaced from each other by a distance equal to or greater than about 70mm, and the heat transfer unit is located between the fire-extinguishing agents.

Clause 5. The rechargeable battery pack of Clause 1, wherein the medium comprises a heat delay unit for blocking a gap between the fire-extinguishing agents.

Clause 6. The rechargeable battery pack of Clause 5, wherein the heat delay unit covers the gap between the fire-extinguishing agents.

Clause 7. The rechargeable battery pack of Clause 5, wherein the fire-extinguishing agents overlap each other with the heat delay unit therebetween.

Clause 8. The rechargeable battery pack of Clause 1, wherein a weight of a first fire-extinguishing agent from among the fire-extinguishing agents satisfies Equation 1:

$$Y=0.0088X+0.211$$

wherein, Y is a weight (g/L) of the first fire-extinguishing agent of the internal space of the case per volume, and X is a battery capacity (Wh) of one of the unit batteries.

Clause 9. The rechargeable battery pack of Clause 8, wherein in Equation 1, X satisfies Equation 2:

$$X=V*6.8/Z$$

wherein, V is a battery capacity (Wh) of one of the unit batteries, and Z is a volume (L) of the internal space of the case.

Clause 10. The rechargeable battery pack of Clause 8, wherein a set volume of the internal space of the case is about 6.8L.

Clause 11. The rechargeable battery pack of Clause 1, wherein a distance between a first fire-extinguishing agent from among the fire-extinguishing agents and the unit batteries is about 2mm to about 70mm.

Clause 12. The rechargeable battery pack of Clause 11, wherein the distance between the first fire-extinguishing agent and the unit batteries is about 2mm to about 32mm.

Clause 13. The rechargeable battery pack of Clause 11, wherein the distance between the first fire-extinguishing agent and the unit batteries is equal to or greater than about 20mm.

Clause 14. The rechargeable battery pack of Clause 1, wherein the solid aerosol comprises a potassium radical.

Clause 15. The rechargeable battery pack of Clause 1, wherein the fire-extinguishing agents comprise a mixture of a potassium compound and a resin.

Clause 16. The rechargeable battery pack of Clause 15, wherein the fire-extinguishing agents further comprise a mesh supporting the mixture.

Clause 17. The rechargeable battery pack of Clause 16, wherein the mesh is configured to penetrate the mixture.

Clause 18. The rechargeable battery pack of Clause 1, wherein a first fire-extinguishing agent from among the fire-extinguishing agents is at the internal space of the case, and a second fire-extinguishing agent of the fire-extinguishing agents is at a second internal space of a second case.

Clause 19. The rechargeable battery pack of Clause 1, further comprising: a battery manager connected to the unit batteries and the fire-extinguishing agents between the unit batteries and the fire-extinguishing agents, wherein the battery manager is configured to sense temperatures of the unit batteries, and is configured to heat one of the fire-extinguishing agents responsive to a temperature of one of the unit batteries being greater than the set temperature.

Clause 20. The rechargeable battery pack of Clause 19, wherein the battery manager further comprises a heater attached to the fire-extinguishing agents, and the battery manager is configured to heat the heater.

**Claims**

1. A rechargeable battery pack comprising:

   unit batteries neighboring each other;
   a case comprising an internal space for accommodating the unit batteries;
   fire-extinguishing agents spaced from the unit batteries and configured to generate a solid aerosol at a predetermined or set temperature; and
   a medium between the fire-extinguishing agents.

2. The rechargeable battery pack as claimed in claim 1, wherein the medium comprises a heat transfer unit for transferring heat between the fire-extinguishing agents.

3. The rechargeable battery pack as claimed in claim 2, wherein the heat transfer unit connects the fire-extinguishing agents.

4. The rechargeable battery pack as claimed in claim 2 or 3, wherein the fire-extinguishing agents are spaced from each other by a distance equal to or greater than 70mm or about 70mm, and the heat transfer unit is located between the fire-extinguishing agents.

5. The rechargeable battery pack as claimed in any preceding claim, wherein the medium comprises a heat delay unit for blocking a gap between the fire-extinguishing agents.

6. The rechargeable battery pack as claimed in claim 5, wherein at least one of:

   the heat delay unit covers the gap between the fire-extinguishing agents; and
   the fire-extinguishing agents overlap each other with the heat delay unit therebetween.

7. The rechargeable battery pack as claimed in any preceding claim, wherein a weight of a first fire-extinguishing agent from among the fire-extinguishing agents satisfies Equation 1:

   $$Y=0.0088X+0.211$$

   wherein, Y is a weight (g/L) of the first fire-extinguishing agent of the internal space of the case per volume, and X is a battery capacity (Wh) of one of the unit batteries.

8. The rechargeable battery pack as claimed in claim 7, wherein
   in Equation 1, X satisfies Equation 2:

   $$X=V*6.8/Z$$

   wherein, V is a battery capacity (Wh) of one of the unit batteries, and Z is a volume (L) of the internal space of the case.

9. The rechargeable battery pack as claimed in claim 7 or 8, wherein a predetermined or set volume of the internal space of the case is 6.8L or about 6.8L.

10. The rechargeable battery pack as claimed in any preceding claim, wherein a distance between a first fire-extinguishing agent from among the fire-extinguishing agents and the unit batteries is 2mm or about 2mm to 70mm or about 70mm.

11. The rechargeable battery pack as claimed in claim 10, wherein:

    the distance between the first fire-extinguishing agent and the unit batteries is 2mm or about 2mm to 32mm or about 32mm; or
    the distance between the first fire-extinguishing agent and the unit batteries is equal to or greater than about 20mm.

12. The rechargeable battery pack as claimed in claim 1, wherein the solid aerosol comprises a potassium radical.

13. The rechargeable battery pack as claimed in any preceding claim, wherein the fire-extinguishing agents comprise a mixture of a potassium compound and a resin,

    wherein optionally the fire-extinguishing agents further comprise a mesh supporting the mixture,
    and wherein further optionally the mesh is configured to penetrate the mixture.

14. The rechargeable battery pack as claimed in any preceding claim, wherein a first fire-extinguishing agent from among the fire-extinguishing agents is in the internal space of the case, and
    a second fire-extinguishing agent of the fire-extinguishing agents is in a second internal space of a second case.

**15.** The rechargeable battery pack as claimed in any preceding claim, further comprising:

a battery manager connected to the unit batteries and the fire-extinguishing agents between the unit batteries and the fire-extinguishing agents,
wherein the battery manager is configured to sense temperatures of the unit batteries, and is configured to heat one of the fire-extinguishing agents responsive to a temperature of one of the unit batteries being greater than the predetermined or set temperature,
and wherein optionally the battery manager further comprises a heater attached to the fire-extinguishing agents, and the battery manager is configured to heat the heater.

# FIG. 1

1000

300    400    300    400    300    201 210

200

L3    L2    L1

FI

100    100    100    100    100

FIG. 2

FIG. 3

# FIG. 4

# FIG. 5

High temp duration

# FIG. 6

N Cell T_6.8 liter

# FIG. 7

FIG. 8

# FIG. 9

N Cell T

# FIG. 10

1002

# FIG. 11

**EUROPEAN SEARCH REPORT**

Application Number

EP 24 21 2708

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 790 106 A1 (SAMSUNG SDI CO LTD [KR]) 10 March 2021 (2021-03-10) | 1-14 | INV. H01M50/383 |
| Y | * abstract * * figures 1-10D * * paragraph [0062] - paragraph [0064] * | 12,13,15 | H01M10/613 |
| | ----- | | |
| Y | DE 10 2023 104790 A1 (FORD GLOBAL TECH LLC [US]) 7 September 2023 (2023-09-07) * abstract * * paragraph [0054] * * claim 2 * | 12,13,15 | |
| | ----- | | |
| Y | WO 2022/265460 A1 (LG ENERGY SOLUTION LTD [KR]) 22 December 2022 (2022-12-22) * abstract * * paragraph [0074] * | 12,13 | |
| | ----- | | |
| Y | CN 115 911 708 A (XIAMEN POWER ON TECH CO LTD) 4 April 2023 (2023-04-04) * abstract * * paragraph [0057] * | 12,13 | |
| | ----- | | |

TECHNICAL FIELDS
SEARCHED        (IPC)

H01M

The present search report has been drawn up for all claims

| Place of search | Date of completion of the search | Examiner |
|---|---|---|
| The Hague | 3 April 2025 | Kämper, Fabian |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

........................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 24 21 2708

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2025

| Patent document cited in search report | | Publication date | Patent family member(s) | | Publication date |
|---|---|---|---|---|---|
| EP 3790106 | A1 | 10-03-2021 | CN | 112448076 A | 05-03-2021 |
| | | | EP | 3790106 A1 | 10-03-2021 |
| | | | HU | E069640 T2 | 28-03-2025 |
| | | | KR | 20210029129 A | 15-03-2021 |
| | | | PL | 3790106 T3 | 24-03-2025 |
| | | | US | 2021074973 A1 | 11-03-2021 |
| DE 102023104790 | A1 | 07-09-2023 | CN | 116706310 A | 05-09-2023 |
| | | | DE | 102023104790 A1 | 07-09-2023 |
| | | | US | 2023277882 A1 | 07-09-2023 |
| WO 2022265460 | A1 | 22-12-2022 | CN | 116636069 A | 22-08-2023 |
| | | | EP | 4333183 A1 | 06-03-2024 |
| | | | JP | 7585493 B2 | 18-11-2024 |
| | | | JP | 2023552352 A | 15-12-2023 |
| | | | KR | 20220168918 A | 26-12-2022 |
| | | | US | 2024088515 A1 | 14-03-2024 |
| | | | WO | 2022265460 A1 | 22-12-2022 |
| CN 115911708 | A | 04-04-2023 | CN | 115911708 A | 04-04-2023 |
| | | | US | 2024178514 A1 | 30-05-2024 |

EPO FORM P0459

For more details about this annex : see Official Journal of the European Patent Office, No. 12/82